# EUROPEAN PATENT APPLICATION

(11) **EP 0 560 616 A1**
(43) Date of publication of application: **15.09.1993**
(21) Application number: 93301877.2
(22) Date of filing: 12.03.1993
(51) Int. Cl.: F01N 7/14

(54) **Exhaust system**

(30) Priority: 13.03.1992 GB 9205581
(71) Applicant: FORD MOTOR COMPANY LIMITED, Brentwood Essex (GB); FORD-WERKE AKTIENGESELLSCHAFT, D-50725 Köln (DE); FORD FRANCE SOCIETE ANONYME, F-92506 Rueil Malmaison Cedex (FR)
(72) Inventor: Bowman, Tim J., Bexley, Kent (GB)
(74) Representative: Messulam, Alec Moses

(57) **Abstract**

An exhaust system for an internal combustion engine has a passage 24, along which exhaust gases will pass, surrounded by a jacket 26, with a vacuum 28 being maintained in the jacket. The vacuum provides insulation for the passage. The vacuum can be supplied from the engine intake manifold 12.

## Description

This invention relates to a method of handling exhaust gases from an internal combustion engine, to an exhaust gas system for an internal combustion engine, as well as components therefor, and to a motor vehicle with such an exhaust system.

There is an increasing need to control the exhaust gas output from internal combustion engines, for environmental and other reasons. Exhaust gases cause chemical pollution of the environment, and give rise to undesirable noise.

In an effort to reduce chemical pollution from exhaust gases, catalytic convertors are widely fitted as part of the exhaust gas handling equipment, to convert noxious exhaust components into environmentally harmless components. However such converters only operate satisfactorily within a particular operating temperature range.

It is known, for example from GB-A-1 519 467, to provide thermal insulation in the form of a heat insulation wall surrounding the exhaust passage to maintain the temperature in the passage.

According to the invention, there is provided a method of handling exhaust gases from an internal combustion engine, wherein the gases are carried along a passage, and the passage is surrounded by a jacket characterised in that a vacuum is established within the jacket.

The use of a vacuum jacket provides both thermal and sound insulation between the gases and the environment, and can assist in reducing noise propagation from the exhaust gas stream.

It is not essential that a particular vacuum level be established in the jacket. The higher the vacuum level, the greater the insulation which can be achieved. However high vacuum levels will also require more substantial jacket walls to prevent the jacket collapsing, and will therefore require more cost and more weight. In practice, a trade-off is likely between the benefits of a higher vacuum and the penalties of providing the structure to establish and maintain the vacuum.

Under normal operation, the vacuum level in the jacket will equate with the maximum vacuum level in the intake manifold, eg about 80 kPa. It is however possible that the vacuum may decay, for example during prolonged motorway driving when the manifold vacuum may be at a lower level, eg about 50 kPa and a satisfactory effect will still be achieved at this level or even at lower levels.

The term "vacuum" in this specification should therefore be construed to include any significantly sub-atmospheric pressure.

Where a catalytic converter is fitted in the exhaust gas passage, the use of a vacuum jacket can help the catalyst to reach its operating temperature more quickly than would be the case without the thermal insulation provided by the jacket.

Where the intake manifold of the engine is able to act as a source of vacuum, then vacuum may be supplied from the manifold to the jacket around the passage. In other applications however the vacuum may be supplied to the jacket from an engine driven or an electrically driven vacuum pump. A check valve may be placed in the vacuum line leading from the intake manifold to the jacket, to allow air to be evacuated from the jacket but to prevent readmission of air to the jacket.

According to a second aspect of the invention, there is provided an exhaust gas system for a motor vehicle in which a passage for exhaust gases leaving the engine is surrounded by a jacket, characterised in that a vacuum source is connected to the space between the jacket and the passage.

If the exhaust gas passage includes a catalytic converter, then the jacket preferably surrounds at least that part of the passage between the engine and the converter and the part of the passage containing the converter.

The space between the jacket and the passage is preferably in communication with the engine intake manifold via a vacuum line so that the vacuum in the manifold is used to evacuate the space. A check valve is preferably fitted in the line to prevent readmission of air to the space.

The invention also provides an exhaust pipe for a motor vehicle, the pipe comprising a central passage for exhaust gases surrounded by a jacket, the jacket defining a sealed space around the central passage, with an aperture communicating with the space and adapted to connect the space to a vacuum source.

The invention can also be applied to an exhaust manifold and/or to an exhaust gas down pipe (being parts of an exhaust gas system), and accordingly the invention also provides an exhaust manifold and/or an exhaust gas down pipe comprising a central passage for exhaust gases surrounded by a jacket, the jacket defining a sealed space around the central passage, with an aperture communicating with the space and adapted to connect the space to a vacuum source.

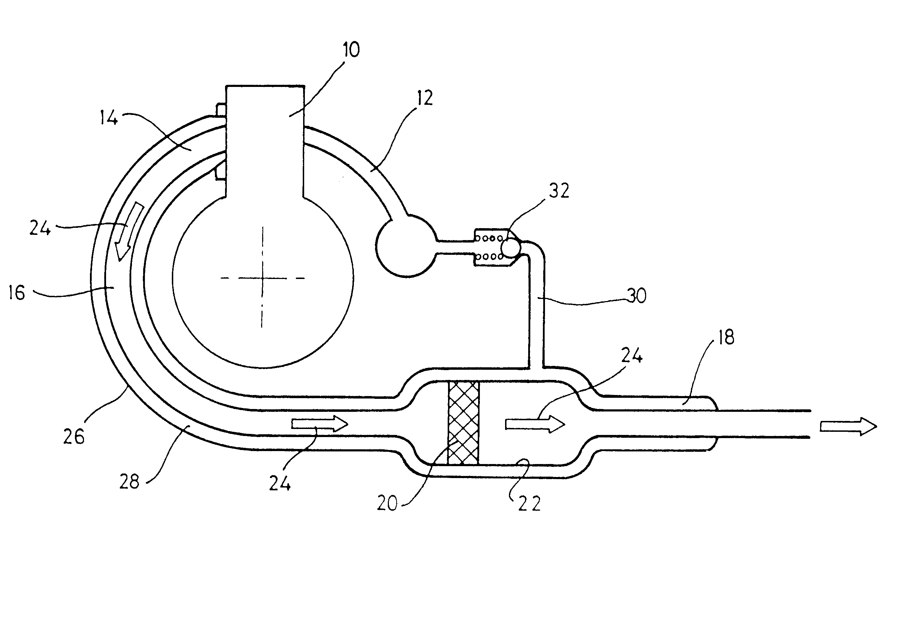

The invention will now be described, by way of example, with reference to the accompanying drawing which is a schematic view of an exhaust system in accordance with the invention.

In the drawing, an engine block 10 of an internal combustion engine has an intake manifold 12 and an exhaust manifold 14. Exhaust gases pass through the manifold 14, along a down pipe 16 and along an exhaust pipe 18. A catalyst brick 20 is fitted in a catalytic converter housing 22 such that the exhaust gases pass through the brick. The flow of exhaust gases is indicated by arrows 24.

The exhaust gas passage, consisting of the manifold 14, the down pipe 16 and the exhaust pipe 18 are all surrounded by a jacket 26 which defines a space 28 around the passage. Where the exhaust gas passage is in the form of a tube, the jacket is in the form of an outer tube surrounding the tube which forms the passage. Where the exhaust gas passage is other than a simple tube, then the jacket will be correspondingly shaped so as to surround the walls of the passage to form a space 28 between the jacket and the passage which has a width of about 4 mm.

In practice, the manifold 14, the downpipe 16 and the exhaust pipe 18 may be separate components joined to one another by appropriate flanges. In such a case each component may have its own, sealed jacket 26 or the jackets 26 around each component may communicate with one another to provide a single vacuum space.

In order to evacuate the vacuum space between the jacket 26 and the exhaust gas passage, a vacuum line 30 links the space 28 with the intake manifold 12. A check valve 32 is fitted in this line. When the engine is running, a vacuum is normally produced in the intake manifold. This vacuum causes airto be drawn out of the space 28 through the line 30. The check valve 32 ensures that the space 28 is connected to the manifold when manifold vacuum is high (eg 80kPa), so that an equivalent vacuum can be drawn in the space 28. However when manifold vacuum drops (eg because the engine is heavily loaded), then the valve 32 closes to maintain the higher level of vacuum in the space.

The result of vacuum in the space 28 is that the exhaust passage is insulated, both thermally and in terms of sound, from the environment. The inherent heat of the exhaust gases will therefore heat up the catalyst brick 20 more rapidly then would be the case without the jacket 26, and the noise resulting from the expulsion of the exhaust gas from the engine will be reduced.

An additional advantage is that other components in the engine compartment will be shielded from the heat of the exhaust pipe.

## Claims

1. A method of handling exhaust gases from an internal combustion engine (10), wherein the gases are carried along a passage (16), and the passage is surrounded by a jacket (26), characterised in that a vacuum is established within the jacket.

2. A method as claimed in Claim 1, wherein the vacuum is supplied from the intake manifold (12) of the engine (10).

3. A method as claimed in Claim 1, wherein the vacuum is supplied from a vacuum pump associated with the engine installation.

4. A method as claimed in Claim 2 or Claim 3, wherein a check valve (32) is placed in the vacuum line leading from the intake manifold (12) to the jacket (10), to allow air to be evacuated from the jacket but to prevent readmission of air to the jacket.

5. An exhaust gas system for a motor vehicle in which a passage (16) for exhaust gases leaving the engine (10) is surrounded by a jacket (26), characterised in that a vacuum source is connected to the space (28) between the jacket and the passage.

6. An exhaust gas system as claimed in Claim 5, wherein the exhaust gas passage (16, 18) in- dudes a catalytic converter (20, 22) and the jacket (26) surrounds at least that part of the passage between the engine (10) and the converter (20, 22).

7. An exhaust gas system as claimed in any one of Claims 5 to 6, wherein the space (28) between the jacket (26) and the passage (16, 18) is in communication with the engine intake manifold (12) via a vacuum line (30) so that the vacuum in the manifold is used to evacuate the space (28).

8. An exhaust gas system as claimed in Claim 7, wherein a check valve (32) is fitted in the line (30) to prevent readmission of air to the space (28).

9. An exhaust pipe for a motor vehicle, the pipe comprising a central passage (16,18) for exhaust gases surrounded by a jacket (26), the jacket (26) defining a sealed space (28) around the central passage, characterised in that the jacket has an inlet (30) communicating with the space (28) and adapted to connect the space to a vacuum source.

10. An exhaust manifold for a motorvehicle, comprising a central passage (16, 18) for exhaust gases surrounded by a jacket (26), the jacket defining a sealed space (28) around the central passage, characterised in that the jacket has an inlet (30) communicating with the space and adapted to connect the space to a vacuum source.
